# EUROPEAN PATENT SPECIFICATION

(11) **EP 3 054 623 B1**
(45) Date of publication and mention of the grant of the patent: **12.08.2020**
(21) Application number: 14797638.5
(22) Date of filing: 12.06.2014
(51) Int. Cl.: H04L 12/10, H04Q 11/00

(54) **OPTO-ELECTRIC HYBRID ACCESS DEVICE INITIALIZATION METHOD AND APPARATUS**
INITIALISIERUNGSVERFAHREN UND -VORRICHTUNG FÜR EINE OPTOELEKTRISCHE HYBRIDZUGANGSVORRICHTUNG
PROCÉDÉ ET APPAREIL D'INITIALISATION DE DISPOSITIF D'ACCÈS HYBRIDE OPTO-ÉLECTRIQUE

(30) Priority: 12.11.2013 CN 201310561811
(43) Date of publication of application: 10.08.2016
(73) Proprietor: ZTE Corporation, Shenzhen, Guangdong 518057 (CN)
(72) Inventor: YUAN, Liquan, Shenzhen Guangdong 518057 (CN)
(74) Representative: Baudler, Ron
(86) International application number: PCT/CN2014/079731
(87) International publication number: WO 2014/183721

(56) References cited:
- EP-A1- 2 940 933
- WO-A1-2009/102243
- CN-A- 101 409 626
- CN-A- 101 820 349
- CN-A- 102 571 502
- CN-U- 202 111 717
- US-A1- 2010 150 556
- US-A1- 2010 272 433
- US-A1- 2012 144 214

## Description

### Technical Field

The present invention relates to the technical field of the optic-electric hybrid access device initialization, and in particular to an initialization method and apparatus for an optic-electric hybrid access device.

### Background of the Related Art

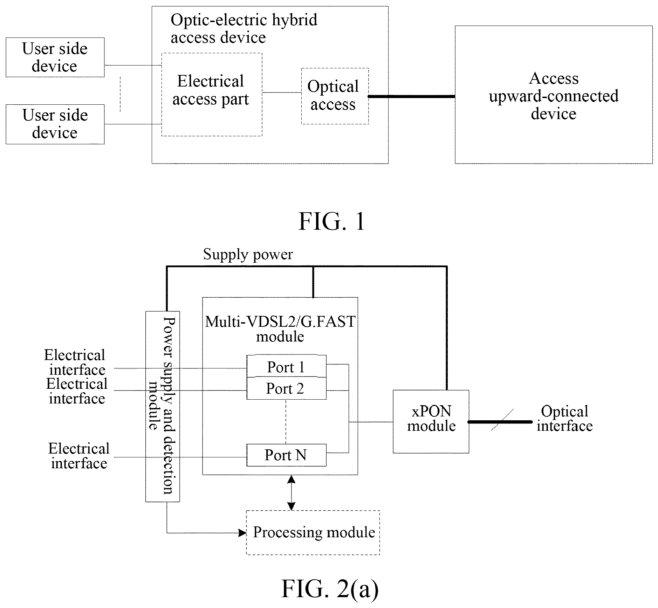

With the gradual deepening of the current fiber to the home (FTTH ) technology, the capability of the home bandwidth provided by the domestic and foreign telecom operators to the user is also increased gradually, which already has the ability of 100M to the home and is developing in the direction of GE (1000M Ethernet) to the home. But due to that the cost of the FTTH is relatively high and the fiber to the home is related to punching through the wall, it leads to the construction difficulties of the fiber to the home, as well as the rate of return on investment is lower, and the investment recovery period is too long, therefore, the operators adopt various modes of more economical coppers to the home instead, by using the existing copper. In order to provide higher bandwidth and more efficient services to the user, the operators put the location of the optical network unit close to the user end as far as possible according to the actual situation, and the fiber deployment is extended to the last level of distribution point, the fiber to distribution point (FTTDp); the device at this point has an optical access part and an electric access part, which can be an optic-electric hybrid access device; the media of the device to the home uses the types, such as, the twisted pair, the Ethernet cable, the coaxial cable or the power line, to replace the fiber direct to the home; and the optical access technology also includes the VDSL, LAN, EOC, PLC, G.fast etc., and other networking schematic diagram is shown in FIG. 1.

In the FTTDp scenario, the deployment scenario of the distribution optical network unit device is more flexible, which will usually be deployed in an outdoor information box, an outdoor line bar, an outdoor eave at the entrance, an indoor basement of the house, an indoor wiring connection hole, etc., and the number of the covered users is more flexible, varying from 1 to 24 households, and even to 48 households. Meanwhile, because the working environment of the optic-electric hybrid access device is very complex, the way to take power is relatively limited. Therefore, all the optical network unit devices require that the user end devices can provide the reverse power supply, which requires that the power consumption of the optic-electric hybrid access device must be very low. The overall power consumption, especially the power consumption of the common part, is higher as a result of the characteristics of its device architecture, and the users will use the network at different time periods, so there also will be an extreme case that only one user is providing the reverse power supply; in that case, a single user needs to supply power for the whole device. How to reduce the overall power consumption of the optic-electric hybrid access device in the working state is the problem required to be solved.

The document US 2012 0144214 A1 discloses an optical network unit that includes a communication detector configured to detect whether a communication is achieved between the ONU and at least one power source equipment (PSE), and a power controller configured to detect whether the PSE is powered and control electrical power, which is provided from the PSE, based on at least one of the detection result about whether the communication is achieved between the ONU and the PSE and the detection result about the PSE is powered.

The document EP 2 940 933 A1 discloses a method for a node device to enter or exist a power-saving mode.

### Summary of the Invention

The embodiment of the present invention provides an initialization method for an optic-electric hybrid access device according to claim 1 and an initialization apparatus for an optic-electric hybrid access device according to claim 6, in order to reduce the overall power consumption of the optic-electric hybrid access device in the working state. Further improvements and embodiments are provided in the dependent claims.

Also provided is an initialization apparatus for an optic-electric hybrid access device, comprising: a multi-user-side-interface unit module, a power supply and detection module, a processing module and an optical network unit (ONU) module of a passive optical network, wherein,
the ONU module of the passive optical network is connected to an optical line terminal (OLT) and the multi-user-side-interface unit module;
the multi-user-side-interface unit module comprises a plurality of ports, each port is corresponding to an electrical interface, and the power supply and detection module is connected between each port of the multi-user-side-interface unit module and the electrical interface;
the power supply and detection module is configured to: detect a reverse power supply state of the electrical interface corresponding to each port of the multi-user-side-interface unit module in real time, to obtain a detection result of each electrical interface and send the detection result of each electrical interface to the processing module;
the processing module is configured to, when a detection result of any electrical interface is that there is a reverse power supply, enable an initialization capability of a port corresponding to that electrical interface in the multi-user-side-interface unit module; and when a detection result of any electrical interface is that there is no reverse power supply, disable an initialization capability of a port corresponding to that electrical interface in the multi-user-side-interface unit module.

Alternatively, in the above-mentioned apparatus, the ONU module of the passive optical network comprises a plurality of logical ONUs or a plurality of physical ONUs, and each logical ONU or each physical ONU is respectively registered and de-registered to the connected OLT.

Alternatively, in the above-mentioned apparatus, a corresponding logical ONU starts a de-registration to the OLT when the detection result of the electric interface is that there is no reverse power supply.

Alternatively, in the above-mentioned apparatus, an upward-connected port of the ONU module of the passive optical network is a passive optical network (PON) interface.

Alternatively, in the above-mentioned apparatus, an electrical interface corresponding to a port of the multi-user-side-interface unit module is a point-to-point electrical interface.

Alternatively, in the above-mentioned apparatus, the multi-user-side-interface unit module is a multi-VDSL2/G.FAST module.

Alternatively, in the above-mentioned apparatus, the power supply and detection module and the processing module are integrated into one control chip.

Also provided is an initialization method for an optic-electric hybrid access device, comprising:
an initialization apparatus for an optic-electric hybrid access device being connected with an optical line terminal (OLT) and a plurality user cables;
the initialization apparatus for an optic-electric hybrid access device detecting reverse power supply states of the plurality of connected user cables in real time, when detecting that there is a reverse power supply at any user cable, enabling an initialization capability of a port corresponding to that user cable, and when detecting that there is no reverse power supply at any user cable, disabling an initialization capability of a port corresponding to that user cable.

Alternatively, in the above-mentioned method, the initialization apparatus for an optic-electric hybrid access device comprises a plurality of logical optical network units (ONUs) or a plurality of physical ONUs, and each logical ONU or each physical ONU is respectively registered and de-registered to the connected OLT.

Alternatively, when detecting that there is no reverse power supply at the user cable, the above-mentioned method further comprises:
a logical ONU corresponding to the user cable starting a de-registration to the OLT.

Alternatively, in the above-mentioned method, an upward-connected port of the ONU is a passive optical network (PON) interface.

Alternatively, in the above-mentioned method, the initialization apparatus for an optic-electric hybrid access device detecting reverse power supply states of the plurality of connected user cables in real time refers to:
the initialization apparatus for an optic-electric hybrid access device being connected with a plurality of user cables through a plurality of electrical interfaces in a multi-user-side-interface unit module of the initialization apparatus for an optic-electric hybrid access device, and the initialization apparatus for an optic-electric hybrid access device detecting reverse power supply states of the plurality of electrical interfaces in real time to determine the reverse power supply states of the plurality of connected user cables.

The technical scheme of the present application alleviates the overall power consumption problem of the optic-electric hybrid access device in the working state.

### Brief Description of Drawings

FIG. 1. is a schematic diagram of a basic access mode of an optic-electric hybrid access device of the related art;
FIG. 2 (a) is a structure diagram of a PON uplink optic-electric access device which supports the reverse power supply in accordance with the embodiment of the present invention;
FIG. 2 (b) is a flow chart of a method of a PON uplink optic-electric access device which supports the reverse power supply in accordance with the embodiment of the present invention;
FIG. 3 (a) is a structure diagram of a PON uplink optic-electric access device with a logical ONU, which supports the reverse power supply, in accordance with the embodiment of the present invention;
FIG. 3 (b) is a flow chart of a method of a PON uplink optic-electric access device with a logical ONU, which supports the reverse power supply, in accordance with the embodiment of the present invention.

### Preferred Embodiments of the Present Invention

The technical scheme of the embodiment of the present invention is described in detail with reference to the accompanying drawings hereinafter. It should be illustrated that, in the case of not conflicting, the embodiments and features of these embodiments in the present application can be combined arbitrarily with each other.

### Embodiment 1

The present embodiment provides an initialization apparatus for an optic-electric hybrid access device, at least including: an optical network unit (ONU) module of a passive optical network, a multi-user-side-interface unit module, a power supply and detection module and a processing module, herein,
the ONU module of the passive optical network is connected to an optical line terminal (OLT) and to the multi-user-side-interface unit module;
the multi-user-side-interface unit module includes a plurality of ports. Each port corresponds to an electrical interface, and the power supply and the detection module is connected between the ports of the multi-user-side-interface unit module and the electrical interfaces;

The power supply and detection module detects a reverse power supply state of each electrical interface in the multi-user-side-interface unit module in real time, and sends the detection result to the processing module.

The processing module enables an initialization capability of the port corresponding to the electrical interface in the multi-user-side-interface unit module when a detection result of the electrical interface is that there is a reverse power supply, and disables the initialization capability of the port corresponding to the electrical interface in the multi-user-side-interface unit module when a detection result of the electrical interface is that there is no reverse power supply.

In real practice, the ONU module of the passive optical network may include a plurality of logical ONUs or a plurality of physical ONUs, herein, each logical ONU or each physical ONU is respectively registered and de-registered to the connected OLT.

It should be illustrated that the corresponding logical ONU starts a de-registration to the OLT when the detection result of the electric interface is that there is no reverse power supply.

While the electrical interface corresponding to the port of the above-mentioned multi-user-side-interface unit module is a point-to-point electrical interface.

In addition, some schemes further put forward that the power supply and detection module and the processing module can be integrated into one control chip.

The realization of the above-mentioned apparatus is described in detail by combining with the specific application scene hereinafter.

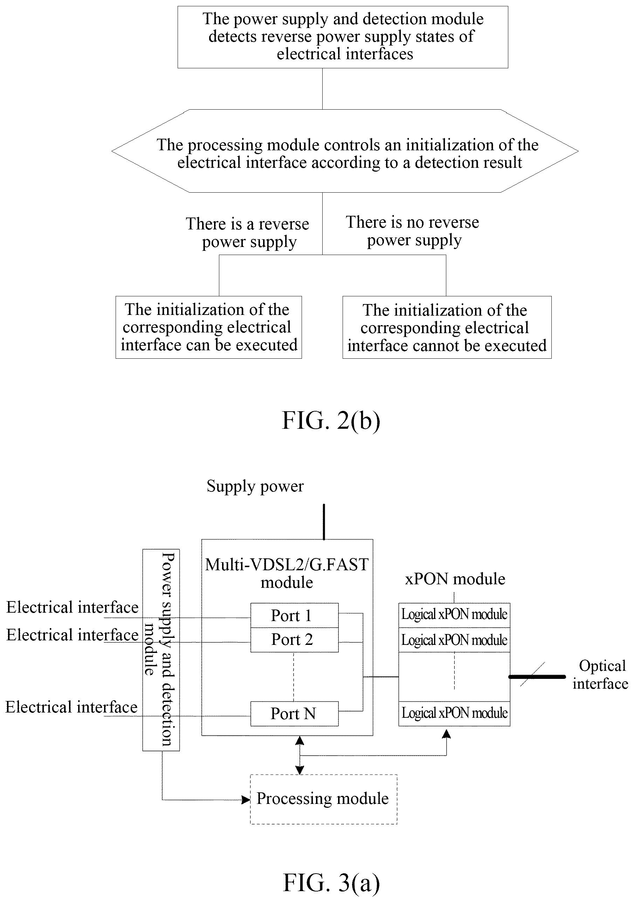

As shown in FIG. 2 (a), there is a PON uplink optic-electric access device which supports the reverse power supply, which includes an ONU module of a passive optical network and a multi-user-side-interface unit module. The ONU module of the passive optical network is represented by an xPON module in FIG. 2 (a), the xPON technology includes technologies such as GPON/EPON/XG-PON/10G EPON, etc., and the xPON module is upward-connected with the OLT and downward-connected with the multi-user-side-interface unit module. The multi-user-side-interface unit module is a multi-VDSL2/G.FAST module in FIG. 2 (a), which includes a plurality of ports. And each port provides an electrical interface. The multi-VDSL2/G.FAST module obtains the power supply through these electrical interfaces. A power supply and detection module is connected between these electrical interfaces and the multi-VDSL2/G.FAST module, through which the power can be supplied to the whole optic-electric hybrid access device. In addition, the power supply and detection module further detects whether there is a reverse power supply on each electrical interface and notifies the processing module. Thus the processing module controls the initialization of the ports in the multi-VDSL2/G.FAST module. It should be explained that the VDSL2/G.FAST module adopted in the present embodiment is just an optional mode to realize the multi-user-side-interface unit module, because it supports the high bandwidth. Other ways to realize the function of the multi-user-side-interface unit module are also within the protection scope of the present application. The control method of the optic-electric access device in FIG. 2(a) is shown in FIG 2(b):
the power supply and detection module detects the reverse power supply state of the electrical interfaces and notifies the processing module;
and the processing module controls the initialization of the electrical interfaces and the corresponding ports of the multi-VDSL2/G.FAST module according to the detection result. If the detection result is that there is a reverse power supply, then the initialization capability of the port of the multi-VDSL2/G.FAST module is enabled, that is, a connected CPE can be initialized normally. If the detection result is that the reverse power supply signal is not detected, then the initialization capability of the port of the multi-VDSL2/G.FAST module is disabled, that is, the connected CPE cannot be initialized.

As shown in FIG. 3 (a), there is another PON uplink optic-electric access device supporting the reverse power supply, which includes an ONU module of a passive optical network and a multi-user-side-interface unit module. The ONU module of the passive optical network is represented by an xPON module in FIG. 3 (a), the xPON technology includes the technologies such as GPON/EPON/XG-PON/10G EPON, etc., and the xPON module is upward-connected with the OLT and downward-connected with the multi-user-side-interface unit module. In the present embodiment, the xPON module further can be divided into a plurality of logical xPON modules, that is, a plurality of logical ONU modules. The multi-user-side-interface unit module is a multi-VDSL2/G.FAST module in FIG. 3(a), which is a realization mode of the multi-user-side-interface unit module. The multi-user-side-interface unit module includes a plurality of ports, and each port provides an electrical interface. The multi-VDSL2/G.FAST module obtains the power supply through the electrical interfaces. A power supply and detection module is connected between the electrical interfaces and the multi-VDSL2/G.FAST module, through which the power can be supplied to the whole optic-electric hybrid access device. In addition, the power supply and detection module further detects whether there is a reverse power supply on each electrical interface, and notifies the processing module, thus the processing module controls the initialization of the ports in the multi-VDSL2/G.FAST module.

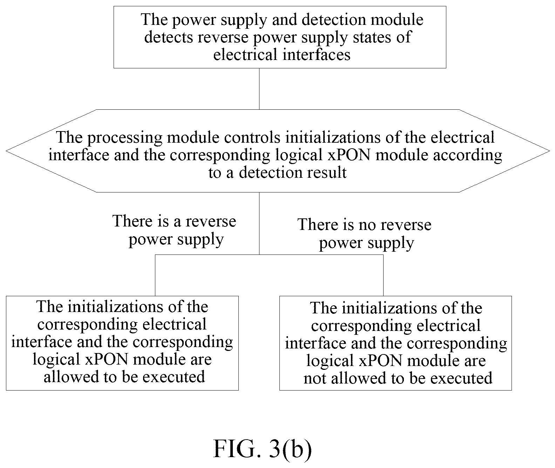

The control method of the optic-electric access device in FIG. 3(a) is shown in FIG 3 (b):
the power supply and detection module detects the reverse power supply state of the electrical interface and notifies the processing module;
the processing module controls the initialization of the electrical interface and the corresponding logical xPON port according to the detection result. If there is a reverse power supply, then the initialization capability of the port of the multi-VDSL2/G.FAST module is enabled, and an initialization action, such as a registration of the logical xPON module, etc., is further initiated, that is, a connected CPE can be initialized normally. If a reverse power supply signal is not detected, then the initialization capability of the port of the multi-VDSL2/G.FAST module is disabled, and a deactivation action, such as a de-registration of the logical xPON module, etc., is further initiated, the connected CPE cannot be initialized.

In addition, the xPON module can further include a plurality of physical xPON modules, each physical xPON module can be connected to a port of the multi-VDSL2/G.FAST module, and in process of enabling and disabling the initialization, an physical xPON module and a port of the multi-VDSL2/G.FAST module can be controlled as a pair.

### Embodiment 2

This embodiment provides an initialization method for an optic-electric hybrid access device, including the following steps:
an ONU module of a passive optical network of an initialization apparatus for an optic-electric hybrid access device is connected with an optical line terminal (OLT) and a multi-user-side-interface unit module;
the initialization apparatus for an optic-electric hybrid access device detects reverse power supply states of the plurality of connected user cables in real time. When there is a reverse power supply detected at the user cable, an initialization capability of a port corresponding to a user cable is enabled. When there is no reverse power supply detected at the user cable, the initialization capability of the port corresponding to the user cable is disabled.

Herein, the above-mentioned initialization apparatus for an optic-electric hybrid access device can include a plurality of logical optical network units (ONUs) or a plurality of physical ONUs, and each logical ONU or each physical ONU is respectively registered and de-registered to a connected OLT. Correspondingly, when it is detected that there is no reverse power supply at the user cable, the logical ONU corresponding to the user cable starts the de-registration to the OLT.

It should be explained that the implementation of the above mentioned method is based on the initialization apparatus for an optic-electric hybrid access device which can adopt the apparatus disclosed in the above-mentioned embodiment 1. At this time, the initialization apparatus for an optic-electric hybrid access device is connected to a plurality of user cables through various electrical interfaces in its multi-user-side-interface unit module, and the reverse power supply states of the plurality of connected user cables can be determined just by that the power supply and detection module in the initialization apparatus for an optic-electric hybrid access device detects the reverse power state of each electrical interface in real time . Other initialization operations can be referred to the corresponding contents of the above-mentioned embodiment 1, and will not go into details here.

It can be understood by those skilled in the art that all or part of steps in the above-mentioned method can be fulfilled by programs instructing the relevant hardware components, and the programs can be stored in a computer readable storage medium such as a read only memory, a magnetic disk or an optical disk, etc. Alternatively, all or part of the steps in the above-mentioned embodiments can be implemented with one or more integrated circuits. Accordingly, each module/unit in the above-mentioned embodiments can be implemented in the form of hardware, or in the form of software function module. The present application is not limited to any specific form of the combination of the hardware and software.

### Industrial Applicability

The technical scheme of the present application alleviates the overall power consumption problem of the optic-electric hybrid access device in the working state. Therefore, the present invention has very strong industrial practicability.

## Claims

1. An initialization apparatus for an optic-electric hybrid access device, comprising: a multi-user-side-interface unit module, a power supply and detection module, a processing module and an optical network unit ONU, module of a passive optical network,
**characterized in that**
the ONU module of the passive optical network is connected to an optical line terminal OLT, and to the multi-user-side-interface unit module;
the multi-user-side-interface unit module comprises a plurality of ports, each port corresponds to an electrical interface, and the power supply and detection module is connected between the plurality of ports of the multi-user-side-interface unit module and the electrical interfaces; wherein the plurality of electrical interfaces of the multi-user-side-interface unit module are connected to a plurality of user cables; the power supply and detection module is configured to: detect a reverse power supply state of the electrical interface corresponding to each port of the multi-user-side-interface unit module in real time, and obtain a detection result of each electrical interface and send the detection result of each electrical interface to the processing module;
the processing module is configured to, when the detection result of any electrical interface is that there is a reverse power supply, enable an initialization capability of a port corresponding to that electrical interface in the multi-user-side-interface unit module; and when the detection result of any electrical interface is that there is no reverse power supply, disable an initialization capability of a port corresponding to that electrical interface in the multi-user-side-interface unit module;
the ONU module of the passive optical network comprises a plurality of logical ONUs or a plurality of physical ONUs, and each logical ONU or each physical ONU is respectively registered and de-registered to the connected OLT;
the processing module is configured to make a corresponding logical ONU start a de-registration to the OLT when the detection result of the electric interface is that there is no reverse power supply.

2. The initialization apparatus for an optic-electric hybrid access device according to any one of claim 1 , wherein,
an upward-connected port of the ONU module of the passive optical network is an optical interface.

3. The initialization apparatus for an optic-electric hybrid access device according to claim 2, wherein, the electrical interface corresponding to a port of the multi-user-side-interface unit module is a point-to-point electrical interface.

4. The initialization apparatus for an optic-electric hybrid access device according to claim 3, wherein, the multi-user-side-interface unit module is a multi-VDSL2/G.FAST module.

5. The initialization apparatus for an optic-electric hybrid access device according to claim 2, wherein, the power supply and detection module and the processing module are integrated in a same control chip.

6. An initialization method for an optic-electric hybrid access device,
**characterized in**
an ONU module of a passive optical network of an initialization apparatus for an optic-electric hybrid access device being connected to an optical line terminal, OLT, and to a multi-user-side-interface unit module;
wherein a plurality of electrical interfaces of the multi-user-side-interface unit module are connected to a plurality of user cables;
a power supply and detection module detecting reverse power supply states of the plurality of the electrical interface in real time; when detecting that there is a reverse power supply at any electrical interface, enabling an initialization capability of a port corresponding to that the electrical interface, and when detecting that there is no reverse power supply at any the electrical interface, disabling an initialization capability of a port corresponding to that electrical interface;
wherein the initialization apparatus for an optic-electric hybrid access device comprises a plurality of logical optical network units, ONUs, or a plurality of physical ONUs, and each logical ONU or each physical ONU is respectively registered and de-registered to the connected OLT;
wherein when detecting that there is no reverse power supply at the electrical interface, the method further comprises:
a logical ONU corresponding to the user cable starting a de-registration to the OLT.

7. The initialization method for an optic-electric hybrid access device according to claim 6, wherein, the step of the initialization apparatus for an optic-electric hybrid access device detecting reverse power supply states of the plurality of connected user cables in real time comprises:
detecting reverse power supply states of the plurality of electrical interfaces in real time to determine the reverse power supply states of the plurality of connected user cables.

## Patentansprüche

1. Initialisierungsgerät für ein optisch-elektrisches Hybridzugangsgerät, umfassend: ein Multi-User-Side-Interface-Einheitsmodul, ein Stromversorgungs- und Erkennungsmodul, ein Verarbeitungsmodul und ein optisches Netzeinheitsmodul eines passiven optischen Netzwerkes, **dadurch gekennzeichnet, dass** das ONU-Modul des passiven optischen Netzwerkes mit einem optischen Leitungsanschluss, OLT, und mit dem Multi-User-Side-Interface-Einheitsmodul verbunden ist;
das Multi-User-Side-Interface-Einheitsmodul eine Vielzahl von Ports umfasst, wobei jeder Port einer elektrischen Schnittstelle entspricht, und das Stromversorgungs- und Erkennungsmodul zwischen der Vielzahl von Ports des Multi-User-Side-Interface-Einheitsmoduls und den elektrischen Schnittstellen angeschlossen ist; wobei die Vielzahl von elektrischen Schnittstellen des Multi-User-Side-Interface-Einheitsmoduls mit einer Vielzahl von Benutzerkabeln verbunden ist; das Stromversorgungs- und Erkennungsmodul so konfiguriert ist, dass es einen Rückstromversorgungszustand der elektrischen Schnittstelle entsprechend jedem Port des Multi-User-Side-Interface-Einheitsmodul in Echtzeit zu erfassen, und ein Erfassungsergebnis jeder elektrischen Schnittstelle zu erhalten und das Erfassungsergebnis jeder elektrischen Schnittstelle an das Verarbeitungsmodul zu senden;
das Verarbeitungsmodul so konfiguriert ist, dass es, wenn das Erfassungsergebnis irgendeiner elektrischen Schnittstelle ergibt, dass eine Rückwärtsstromversorgung vorhanden ist, eine Initialisierungsfähigkeit eines Anschlusses, der dieser elektrischen Schnittstelle in dem Multi-User-Side-Interface-Einheitsmodul entspricht, aktiviert; und wenn das Erfassungsergebnis irgendeiner elektrischen Schnittstelle ergibt, dass keine Rückwärtsstromversorgung vorhanden ist, eine Initialisierungsfähigkeit eines Anschlusses, der dieser elektrischen Schnittstelle in dem Multi-User-Side-Interface-Einheitsmodul entspricht, deaktiviert;
das ONU-Modul des passiven optischen Netzwerkes eine Vielzahl von logischen ONUs oder eine Vielzahl von physikalischen ONUs umfasst, und jede logische ONU oder jede physikalische ONU bei dem angeschlossenen OLT registriert bzw. abgemeldet wird;
das Verarbeitungsmodul so konfiguriert ist, dass es eine entsprechende logische ONU veranlasst, eine Deregistrierung beim OLT zu starten, wenn das Erfassungsergebnis der elektrischen Schnittstelle ist, dass keine Rückstromversorgung vorhanden ist.

2. Initialisierungsgerät für ein optisch-elektrisches Hybridzugangsgerät nach einem der Ansprüche 1, wobei,
ein aufwärtsgerichteter Port des ONU-Moduls des passiven optischen Netzwerkes eine optische Schnittstelle ist.

3. Initialisierungsgerät für ein optisch-elektrisches Hybridzugangsgerät nach Anspruch 2, wobei die elektrische Schnittstelle, die einem Port des Multi-User-Side-Interface-Einheitsmoduls entspricht, eine elektrische Punktzu-Punkt-Schnittstelle ist.

4. Initialisierungsgerät für ein optisch-elektrisches Hybridzugangsgerät nach Anspruch 3, wobei das Multi-User-Side-Interface-Einheitsmodul ein Multi-VDSL2/G.FAST-Modul ist.

5. Initialisierungsgerät für ein optisch-elektrisches Hybridzugangsgerät nach Anspruch 2, wobei das Stromversorgungs- und Erkennungsmodul und das Verarbeitungsmodul in einem gleichen Steuerchip integriert sind.

6. Initialisierungsverfahren für ein optisch-elektrisches Hybridzugangsgerät, **gekennzeichnet durch**
ein ONU-Modul eines passiven optischen Netzwerkes eines Initialisierungsgeräts für ein optisch-elektrisches Hybridzugangsgerät, das mit einem optischen Leitungsendgerät, OLT, und mit einem Multi-User-Side-Interface-Einheitsmodul verbunden ist;
wobei eine Vielzahl von elektrischen Schnittstellen des Mehrbenutzer-Schnittstelleneinheitsmoduls mit einer Vielzahl von Benutzerkabeln verbunden ist;
ein Stromversorgungs- und Erkennungsmodul, das in Echtzeit die Rückstromversorgungszustände der mehreren elektrischen Schnittstellen erkennt; wenn erkannt wird, dass es eine Rückstromversorgung an irgendeiner elektrischen Schnittstelle gibt, wird eine Initialisierungsfähigkeit eines Anschlusses, der der elektrischen Schnittstelle entspricht, aktiviert, und wenn erkannt wird, dass es keine Rückstromversorgung an irgendeiner der elektrischen Schnittstellen gibt, wird eine Initialisierungsfähigkeit eines Anschlusses, der der elektrischen Schnittstelle entspricht, deaktiviert;
wobei das Initialisierungsgerät für ein optisch-elektrisches Hybridzugangsgerät eine Vielzahl von logischen optischen Netzwerkeinheiten, ONUs, oder eine Vielzahl von physikalischen ONUs umfasst, und jede logische ONU oder jede physikalische ONU beim angeschlossenen OLT an- bzw. abgemeldet wird;
wobei, wenn festgestellt wird, dass es keine Rückstromversorgung an der elektrischen Schnittstelle gibt, das Verfahren ferner umfasst:
eine logische ONU, die dem Benutzerkabel entspricht, das eine Deregistrierung an den OLT startet.

7. Initialisierungsverfahren für ein optisch-elektrisches Hybridzugangsgerät nach Anspruch 6, wobei der Schritt des Initialisierungsgeräts für ein optisch-elektrisches Hybridzugangsgerät, das die Rückstromversorgungszustände der mehreren angeschlossenen Benutzerkabel in Echtzeit erfasst, umfasst:
Erfassen von Rückstromversorgungszuständen der Vielzahl von elektrischen Schnittstellen in Echtzeit, um die Rückstromversorgungszustände der Vielzahl von angeschlossenen Benutzerkabeln zu bestimmen.

## Revendications

1. Appareil d'initialisation pour un dispositif d'accès hybride optique-électrique, comprenant: un module d'unité d'interface côté utilisateur multiple, un module d'alimentation et de détection, un module de traitement et un module d'unité de réseau optique, ONU, d'un réseau optique passif, **caractérisé en ce que** le module ONU du réseau optique passif est connecté à un terminal de ligne optique, OLT, et au module d'unité d'interface côté utilisateur multiple;
le module d'unité côté utilisateur multiple comprend une pluralité de ports, chaque port correspond à une interface électrique, et le module d'alimentation électrique et de détection est connecté entre la pluralité de ports du module d'unité côté utilisateur multiple et les interfaces électriques ; dans lequel la pluralité d'interfaces électriques du module d'unité côté utilisateur multiple sont connectées à une pluralité de câbles utilisateur; le module d'alimentation électrique et de détection est configuré pour : détecter en temps réel un état d'alimentation électrique inverse de l'interface électrique correspondant à chaque port du module d'unité multi-utilisateur-interface latérale, et obtenir un résultat de détection de chaque interface électrique et envoyer le résultat de détection de chaque interface électrique au module de traitement;
le module de traitement est configuré pour, lorsque le résultat de la détection d'une interface électrique quelconque est qu'il y a une alimentation électrique inversée, activer une capacité d'initialisation d'un port correspondant à cette interface électrique dans le module d'unité du côté de l'interface multi-utilisateur ; et lorsque le résultat de la détection d'une interface électrique quelconque est qu'il n'y a pas d'alimentation électrique inversée, désactiver une capacité d'initialisation d'un port correspondant à cette interface électrique dans le module d'unité du côté de l'interface multi-utilisateur;
le module ONU du réseau optique passif comprend une pluralité d'ONU logiques ou une pluralité d'ONU physiques, et chaque ONU logique ou chaque ONU physique est respectivement enregistrée et désenregistrée dans l'OLT connecté;
le module de traitement est configuré de manière à ce qu'une ONU logique correspondante commence à se désenregistrer auprès de l'OLT lorsque le résultat de la détection de l'interface électrique est qu'il n'y a pas d'alimentation électrique inverse.

2. Appareil d'initialisation pour un dispositif d'accès hybride optique-électrique selon l'une quelconque des revendications 1, dans lequel,
un port connecté en amont du module ONU du réseau optique passif est une interface optique.

3. Appareil d'initialisation pour un dispositif d'accès hybride optique-électrique selon la revendication 2, dans lequel, l'interface électrique correspondant à un port du module d'unité du côté de l'interface multi-utilisateur est une interface électrique point à point.

4. Appareil d'initialisation pour un dispositif d'accès hybride optique-électrique selon la revendication 3, dans lequel le module d'unité du côté de l'interface multi-utilisateur est un module multi-VDSL2/G.FAST.

5. Appareil d'initialisation pour un dispositif d'accès hybride optique-électrique selon la revendication 2, dans lequel, le module d'alimentation et de détection et le module de traitement sont intégrés dans une même puce de contrôle.

6. Procédé d'initialisation pour un dispositif d'accès hybride optique-électrique, **caractérisé en ce que**
un module ONU d'un réseau optique passif d'un appareil d'initialisation d'un dispositif d'accès hybride optique-électrique connecté à un terminal de ligne optique, OLT, et à un module d'unité du côté de l'interface multi-utilisateur;
dans lequel une pluralité d'interfaces électriques du module d'unité du côté de l'interface multi-utilisateur sont connectées à une pluralité de câbles d'utilisateur;
un module d'alimentation et de détection détectant les états d'alimentation inverse de la pluralité d'interfaces électriques en temps réel ; lorsqu'il détecte qu'il y a une alimentation inverse à une interface électrique quelconque, il active une capacité d'initialisation d'un port correspondant à cette interface électrique, et lorsqu'il détecte qu'il n'y a pas d'alimentation inverse à une interface électrique quelconque, il désactive une capacité d'initialisation d'un port correspondant à cette interface électrique;
dans lequel l'appareil d'initialisation pour un dispositif d'accès hybride optique-électrique comprend une pluralité d'unités de réseau optique logique, ONUs, ou une pluralité d'ONU physiques, et chaque
ONU logique ou chaque ONU physique est respectivement enregistrée et désenregistrée auprès de l'OLT connecté;
dans lequel, lorsqu'il est détecté qu'il n'y a pas d'alimentation électrique inverse à l'interface électrique, le procédé comprend en outre:
une ONU logique correspondant au câble utilisateur qui démarre un désenregistrement auprès de l'OLT.

7. Procédé d'initialisation pour un dispositif d'accès hybride optique-électrique selon la revendication 6, dans lequel l'étape de l'appareil d'initialisation pour un dispositif d'accès hybride optique-électrique détectant les états d'alimentation électrique inverse de la pluralité de câbles utilisateurs connectés en temps réel comprend:
la détection des états d'alimentation électrique inverse de la pluralité d'interfaces électriques en temps réel pour déterminer les états d'alimentation électrique inverse de la pluralité de câbles d'utilisateur connectés.
